# EUROPEAN PATENT SPECIFICATION

(11) **EP 3 813 512 B1**
(45) Date of publication and mention of the grant of the patent: **28.08.2024**
(21) Application number: 19748977.6
(22) Date of filing: 26.06.2019
(51) Int. Cl.: A01J 5/04, A01J 5/08

(54) **MILKING LINER FOR A MILKING CUP OF A MILKING INSTALLATION, MILKING CUP AND INSTALLATION PROVIDED THEREWITH, AND METHOD THEREFOR**
MELKUMMANTELUNG FÜR MELKBECHER EINER MELKANLAGE, MELKBECHER UND DAMIT AUSGESTATTETE ANLAGE UND VERFAHREN DAFÜR
MANCHON TRAYEUR POUR GOBELET TRAYEUR D'UNE INSTALLATION DE TRAITE, GOBELET TRAYEUR ET INSTALLATION POURVUE DE CELUI-CI, ET PROCÉDÉ ASSOCIÉ

(30) Priority: 26.06.2018 NL 2021181
(43) Date of publication of application: 05.05.2021
(73) Proprietor: BouMatic Technology B.V., 8304 AX Emmeloord (NL)
(72) Inventor: SLAGER, Jan, 8316 PT Marknesse (NL)
(74) Representative: Arnold & Siedsma
(86) International application number: PCT/NL2019/050389
(87) International publication number: WO 2020/005059

(56) References cited:
- WO-A1-2015/055821
- DE-A1- 102006 040 079
- DE-A1- 102014 101 615
- GB-A- 644 168
- US-A1- 2005 284 379
- US-A1- 2011 126 768

## Description

The invention relates to a milking liner for a milking cup of a milking installation, a milking installation comprising a number of cups provided with said milking liner and a method of milking involving providing said milking installation. Such milking installations are used for milking animals, including dairy cows.

Milking installations, understood to mean both conventional milking installations and milking robots, are provided in practice with a number of milking cups which can be attached fully or partially automatically or manually. These milking cups are provided with a milking liner. Such a milking liner is usually manufactured from a rubber, silicone or suitable plastic material and in practice arranged in a milking cup. In use the milking cup is attached to a teat of the animal for milking for the purpose of the milking process. Known milking cups make use of pressure differences which are applied over time in order to achieve a pulsating action on the teat of the animal for milking. This pulsating action stimulates a milk release. During the milking process the milk release is preferably carried to a milk tank and then transported further for processing.

WO 2015/055821 A1 relates to a teat cup liner and a vent suitable for said teat cup liner. The vent consists of a highly elastic material which can be elastically deformed, thereby allowing dirt to be removed.

GB 644 168 A relates to a teat cup comprising a rubber lining, having a collapsable tubular portion moulded with a flattened cross-section, and a metal casing, the rubber lining having a noncollapsable bulbous annular mouthpiece moulded integrally on the tubular portion and having an internal flexible rim for fitting around the teat. A hood moulded integrally with the lining fits over a rim of the casing. The bulbous mouthpiece has a small vent hole or a larger hole may be fitted with a rivet in which a small hole has been drilled.

DE 10 2006 040079 A1 relates to a rubber that has a rubber milking head comprising an introduction head for a teat, and a pipe part in continuity of the head. The pipe part delimits a teat housing chamber and an inner chamber that is arranged in the bottom and connected to the atmosphere by a channel. The channel is dimensioned such that air current guided from the atmosphere to the channel is equal to or greater than air current injected through the channel in a direction of the inner chamber. The channel is formed in a wall of the rubber.

A problem which occurs in practice is the occurrence of an (incorrect level of) vacuum or underpressure for the so-called head pressure, which is also referred to as head vacuum. This head pressure occurs in the upper side of the side of the milking cup which is directed upward during use. An incorrect pressure level has an adverse effect on the milk release. The drawback of the head pressure being too high is that the animal for milking may not be properly finished milking, whereby reduced milk releases and/or infections can occur. A drawback of the head pressure being too low is that not enough pressure is exerted on the teat, whereby the teat is not properly stimulated and the animal for milking does not release the milk properly. This likewise results in a reduced milk release and possible infections.

The present invention has for its object to provide a milking liner for a milking cup whereby the above stated problems are obviated or at least reduced.

This object is achieved with the milking liner for a milking cup of a milking installation according to claim 1.

The milking liner according to the invention can be arranged in a teat cup and therewith form a milking cup for a milking installation. The milking liner is provided with a mouthpiece which can be placed during use over a teat of the animal for milking. During use the outlet of the milking liner is operatively connected to for instance a milk tank, so that the milk release can be discharged from the milking liner and the milking cup. The liner extends between the inlet and the outlet. This liner takes a flexible form such that a pulsating action can be transferred to the teat of the animal for milking. The milking cups provided with such a milking liner are arranged manually and/or mechanically over a teat of an animal for milking, such that the animal can be milked. This animal is for instance a dairy cow, dairy goat or other animal for milking.

According to the invention, an air inlet is arranged at or close to the mouthpiece of the milking liner. The air inlet is provided with a pressure compensator. During use the pressure can hereby be controlled and be set or adjusted to the desired (pressure) conditions in the head or teat chamber of the milking cup. A better stimulation of the teat of the animal for milking is hereby achieved, such that the milk release is optimized. In addition, the risk of irritations and infections is reduced. This improves the overall health of the animal for milking and in addition optimizes the milk release during the milking process still further.

Providing the pressure compensator in the air inlet achieves that a better control of the actually prevailing pressure in the head or teat chamber is obtained. With the pressure compensator it is preferably particularly possible to maintain the prevailing head pressure and to control it to have a desired value and/or keep it within a desired range. According to the invention, it is thus possible to, as it were, configure the milking liner for a predetermined value of the pressure during the milking process. This pressure can hereby be controlled better in a wider range of occurring situations, and one or more of the above stated advantages and effects are thereby realized. Variations in the milking situation for instance occur as a result of variation in the dimensions of the teat of the animal for milking and/or occur as a result of different specifications of the milking installation with associated dimensions of the milking liner and milking cup.

In addition, a better control of the so-called head pressure enables a better stimulation of the teat of the animal for milking. Because of the improved control of the head pressure, it is further possible also to realize such an improved stimulation in a wider range of situations which may occur. The milk release is hereby further improved. An additional advantage is that a greater variety of teats can be milked with the milking liner according to the invention.

A further advantage of providing a pressure compensator is that the underpressure (also referred to as the vacuum) under the teat and the head pressure at the start and/or end of the milking process are prevented from being higher than desired. Providing the pressure compensator according to the invention achieves that air is then let into the head of the liner in regulated and controlled manner. The pressure hereby remains at the desired level better, and in any case closer thereto, throughout the whole milking process. A further improved milk release and, in addition, a better control of the health of the animal for milking will hereby be provided. Adverse effects on the health of the teat/teats is avoided in particular. It has additionally been found that providing the pressure compensator brings about a kind of calming effect. This enhances the overall condition of the animal for milking, as well as the milk release.

According to the invention, the pressure compensator comprises a pressure valve or flow restriction.

Such a pressure valve or other type of flow restriction is for instance embodied in the form of a valve, membrane or other valve opening as applied in practice in squeeze bottles. Such a pressure valve enables a control of the level of the head pressure to be realized in practice during the milking process.

The pressure valve or flow restriction is preferably provided with a passage with a maximum diameter in the range of 0.5-1.2 mm, preferably 0.5-1.1 mm, more preferably 0.6-1.0, and the maximum diameter of the passage most preferably amounts to 0.6-0.8 mm. It has been found that with such maximum diameters a good and effective air inlet is possible for keeping the pressure in the head or teat chamber at the desired value and simultaneously controlling the air inlet such that the conditions during the milking process can be regulated and controlled. This more constant pressure further stimulates the milk release during the milking process.

In a currently preferred embodiment the pressure valve or flow restriction is embodied as a membrane element. It has been found that such a membrane element provided with a passage enables an effective control of the air supply.

In an advantageous embodiment according to the invention the pressure compensator comprises a ring.

Providing a ring provides an additional support for the pressure valve, particularly in the form of a membrane element. The ring preferably contributes to the holding in position of the pressure valve. In such a case the ring functions as a kind of pressing ring. It has been found that application of a ring enables an even better control of the air supply. It has further been found here that sound effects which may occur during the air supply, also referred to as "whistling", are reduced or even wholly avoided.

The ring preferably has a design such that, when the pressure valve or flow restriction is opened, it lies at least partially against the ring. This further increases the stability of the pressure valve, particularly embodied as a membrane element. In addition, opening of such a pressure valve is regulated by the ring. A further additional effect is that sound effects which may occur are avoided or reduced still further.

In a currently preferred embodiment the ring is provided with a flange-like element. If the pressure valve/membrane element opens, it lies at least partially against the ring, preferably therefore against the flange-like element. It will be apparent that other embodiments of the ring with a similar action are likewise possible. Depending on the embodiment of the passage, it is even possible to apply a substantially flat ring, wherein, when the passage is opened, it lies at least partially against this ring.

In an advantageous embodiment according to the invention the pressure compensator comprises an air channel and optionally an air chamber arranged therein.

By providing an air channel air is supplied in effective manner. In a currently preferred embodiment the air channel is embodied without transitions, restrictions and the like. This has the advantage that the channel can be arranged in relatively simple manner and there are additionally fewer edges, whereby contamination is avoided. Optionally providing an air chamber enables a control of the air speed occurring in practice with the air supply.

The air chamber preferably comprises a narrowed portion at or close to the transition to the air channel. By providing the narrowed portion a relatively small passage opening is provided. This has the particular advantage that, even in the case of a defective pressure compensator, some regulating action on the air inlet is preserved.

A further advantage of applying the narrowed portion is that the action of the pressure compensator is further improved. It has been found that the control of the air supply in particular has a linear progression in relation to the occurring pressure difference. The controllability of the conditions in the milking liner is hereby further improved.

In an advantageous embodiment according to the invention the pressure compensator is arranged at or close to the inside of the milking liner.

Providing the pressure compensator at or close to the inside of the milking liner reduces the risk of contamination of the pressure compensator compared to an embodiment wherein the pressure compensator is provided on the outside. Blockage is hereby for instance prevented. This increase the robustness and reliability of the milking liner according to the invention.

In an advantageous embodiment according to the invention the pressure compensator is configured to open at a pressure difference in the range of 1-100 kPa, preferably a range of 5-25 kPa, more preferably in the range of 7.5-15 kPa, the pressure compensator for instance opens at a pressure difference of around 10 kPa.

With a correct configuration of the pressure compensator an effective control of the pressure prevailing in the head or teat chamber of the milking liner is obtained in practice.

The invention also relates to a milking cup for a milking installation and/or a milking installation comprising a number of such milking cups, wherein the milking cup is provided with a milking liner according to an embodiment of the invention.

Such a milking cup and/or milking installation provides the same effects and advantages as described for the milking liner.

Such a milking installation can be, among other things, a conventional milking installation and a so-called milking robot.

A robust milking cup which operates stably in practice is in particular obtained, whereby the milking installation can operate more effectively, with a better milk release and/or less risk of infections or irritations of the teats of the animal for milking.

The invention further also relates to a method for the milking, wherein the method comprises the steps of:
- providing a milking installation with a number of milking cups provided with a milking liner in an embodiment according to the invention;
- connecting the milking cups;
- controlling the head pressure with the pressure compensator; and
- milking.

Such a method provides the same effects and advantages as described for the milking liner, milking cup and/or milking installation.

In a possible embodiment the method further comprises the additional step of selecting a pressure compensator. By selecting the most suitable pressure compensator it is possible to take into account the dimensions and operation of the relevant milking installation, as well as the species or breed of the animals for milking, particularly the (average) teat dimensions thereof. It is hereby possible to control the pressure control further and to adjust it even better to the specific situation.

Further advantages, features and details of the invention are elucidated on the basis of preferred embodiments thereof, wherein reference is made to the accompanying drawings, in which:
- figure 1 shows a view of a milking cup provided with a milking liner according to the invention with a teat;
- figure 2A shows another view of the milking cup of figure 1;
- figure 2B shows a view of a section of the milking cup of figures 1 and 2A during the milking process;
- figure 3 shows a view of a milking liner according to the invention of the milking cup according to figures 1 and 2;
- figures 4A and B show respectively a view and section of the pressure compensator in the milking liner according to the invention;
- figures 5A and B show a view of an alternative embodiment of a pressure compensator in the milking liner according to the invention; and
- figure 6 shows a view of the composition of the pressure compensator of figures 5A and B.

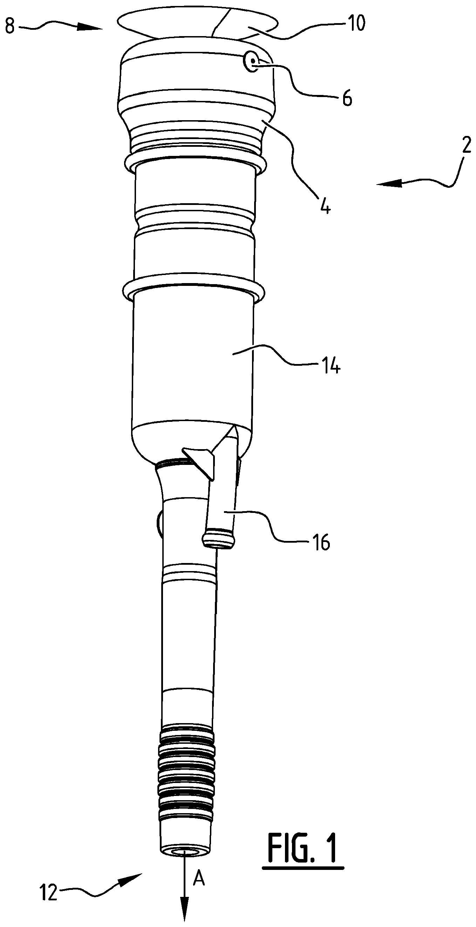

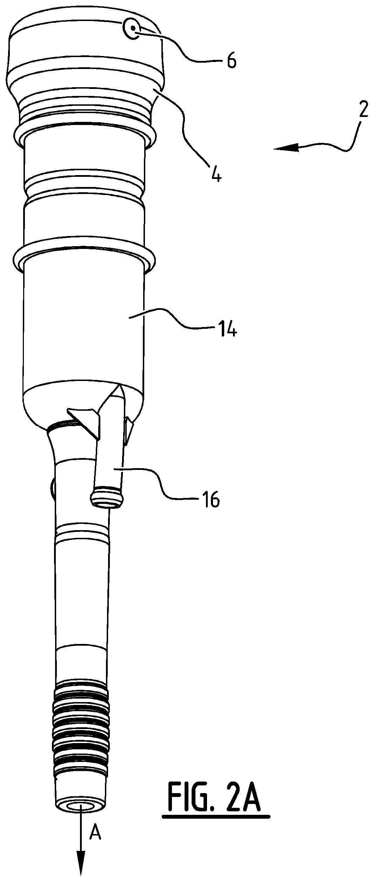

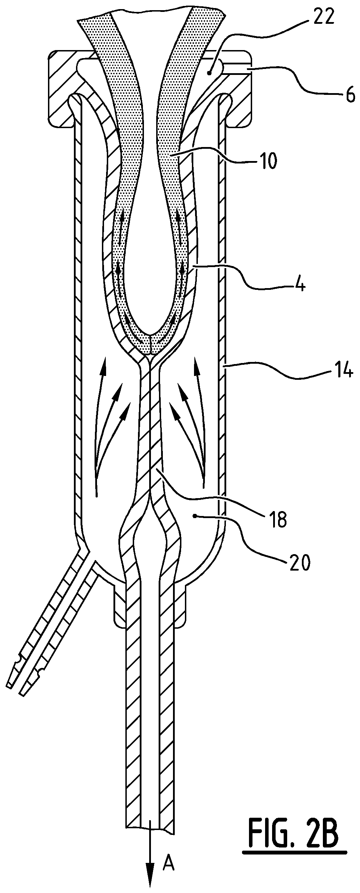

Milking cup 2 (figures 1, 2A, 2B) is provided with milking liner 4 in which pressure compensator 6 is arranged. Inlet 8 of milking liner 4 makes it possible to position milking cup 2 over teat 10 of an animal for milking for the purpose of a milking process. Milking cup 2 is further provided with outlet 12 through which milk release is transported further in direction A. In the shown embodiment milking liner 4 is provided in teat cup 14, on which a connection 16 for a pulse tube is provided. A pulsating action can hereby be exerted on teat 10 during the milking process.

Milking liner 4 is further provided with flexible wall part 18 which extends substantially in the interior of a teat cup 14 (figure 2B). As a result of the pulsation a varying pressure is exerted in pulsation chamber 20, whereby wall part 18 is periodically compressed and opened so as to thereby exert a pulsating action on teat 10. Provided on the upper side of milking liner 4 is head or buffer area or teat chamber 22. Pressure compensator 6 provides for supply of air for regulating the pressure in head or teat chamber 22 thereby.

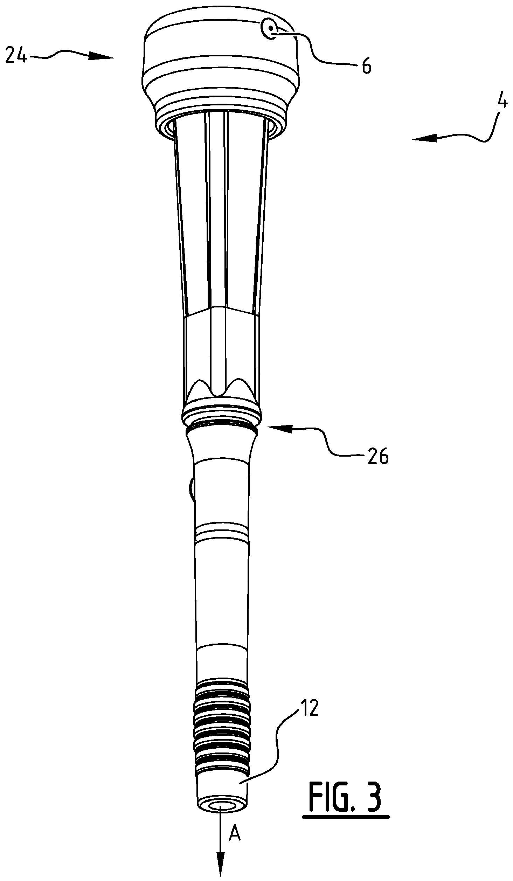

Milking liner 4 (figure 3) is provided with mouthpiece 24 which is provided with a kind of buffer. Milking liner 4 is further provided with groove 26 for the purpose of a correct positioning relative to teat cup 14.

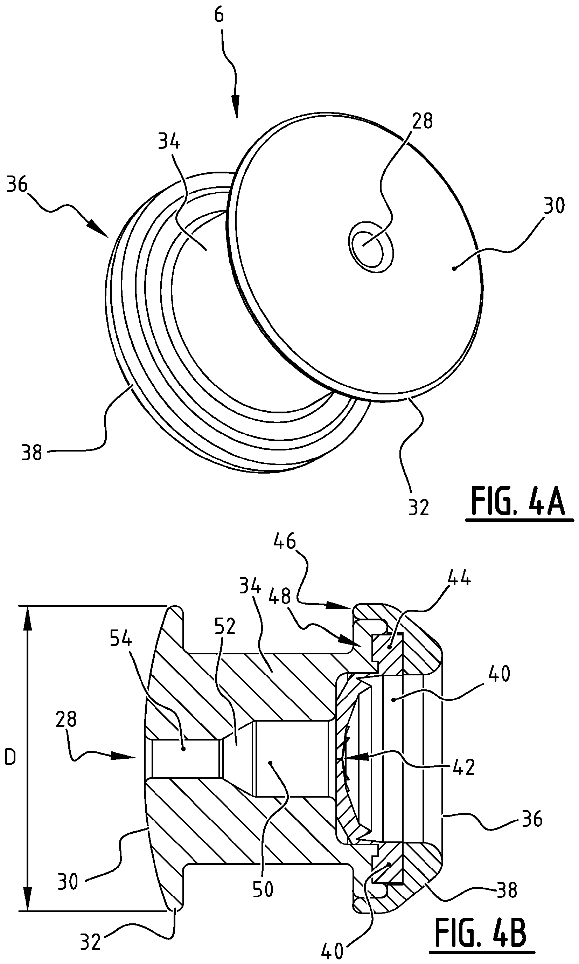

In the shown embodiment pressure compensator 6 (figures 4A, 4B) is provided with opening 28 which is arranged on outer surface 30. During use, i.e. in mounted state, outer surface 30 is positioned on the outside of milking liner 4. Edge 32 lies here wholly or partially against milking liner 4. Housing 34 connects outer surface 30 to inner surface 36.

For the purpose of mounting of pressure compensator 6 rounding 38 is provided in milking liner 4, whereby pressure compensator 6 can be pressed into milking liner 4 at the desired position (figure 4A) with controlled force during mounting.

It will be apparent that other embodiments are likewise possible for pressure compensator 6. It is thus for instance also possible to provide pressure compensator 6 integrally in the material of milking liner 4 as alternative to a separately insertable pressure compensator 6.

According to the invention, the pressure compensator 6 comprises a pressure valve 40 comprising a membrane element with an air passage 42. In the shown embodiment membrane or valve 40 is provided close to inner surface 36 in order to prevent contamination as far as possible. Edge 44 of membrane or valve 40 is arranged in or on housing 34 of pressure compensator 6. In the shown embodiment inner part with inner surface 36 is connected to housing 34 is using fitting piece 46. Membrane or valve 40 is arranged in the space between inner surface 36 and housing 34 using fitting piece 48.

It will be apparent that other ways of attachment, for instance glueing or another suitable connection, are possible for providing membrane or valve 40 in or on pressure compensator 6. It is thus for instance possible to arrange membrane or valve 40 integrally in or on housing 34 during the production process. Additionally or alternatively, housing 34 can likewise be provided integrally in or on milking liner 4 of milking cup 2.

Further provided in the shown embodiment is air chamber 50. In the shown embodiment air chamber 50 has a relatively large diameter on the side of pressure compensator 6 directed inward during use and a relatively small diameter on the side of pressure compensator 6 directed outward during use. It is hereby possible to limit the air speed. Narrowed portion 52 here forms the transition between air chamber 50 and air channel 54 whereby the connection to outer opening 28 is provided.

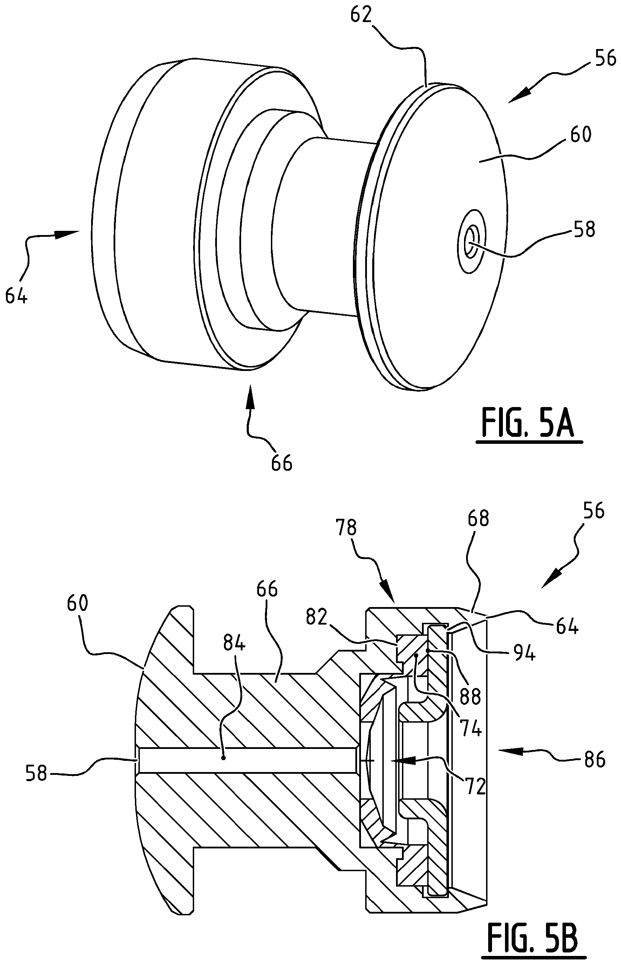

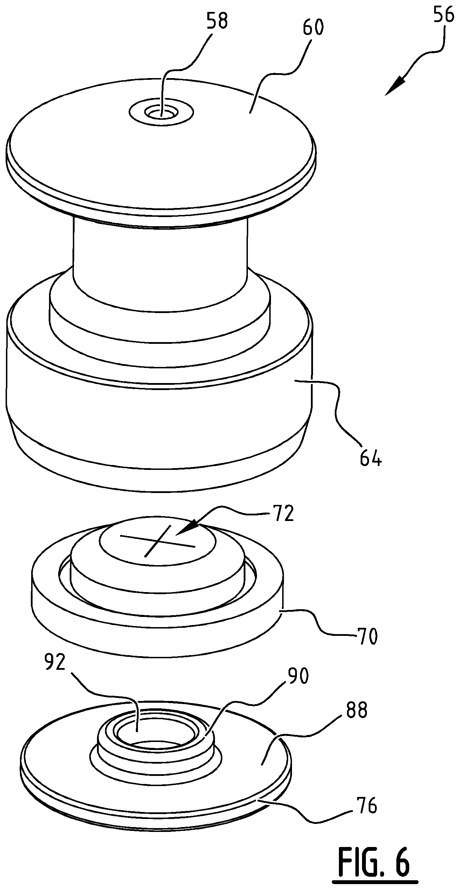

Pressure compensator 56 (figures 5A-B and 6) is provided with opening 58 arranged on outer surface 60. After mounting, edge 62 of outer surface 60 lies on the outside of milking liner 4. Inner surface 64, with rounding 68 for easy mounting, is connected via housing 66 to outer surface 60. Provided in housing 66 is membrane 70 in which air passage 72 is arranged. Edge 74 of membrane or valve 70 is arranged in or on housing 66 of pressure compensator 56. In the shown embodiment ring 76 is arranged in recess 78 of housing 66, preferably in clamping manner. Membrane or valve 70 is arranged in recess 78 and groove 82 using fitting piece 80. Further arranged in housing 66 is air channel 84. Channel 84 extends from opening 58, via passage 72 to outer end 86 of pressure compensator 56. Ring 76 is provided with pressing surface 88 and flange 90 in which opening 92 is arranged. In the shown embodiment membrane 70 is enclosed with edge 74 between the surface close to and in groove 82 and pressing surface 88. On the other side of pressing surface 88 ring 70 lies in the mounted state against edge 94. Ring 76 is dimensioned such that when membrane 70 is opened, it lies against ring 76, particularly against flange 90 thereof. Experiments have shown that the problem in respect of the "wistling" is hereby avoided completely or at least for the most part. It is even possible here to dispense with a separate air chamber and to suffice with air channel 84, which has the additional advantage that it can be arranged in relatively simple manner, and there are further also fewer edges, whereby contamination is avoided.

In the shown embodiment pressure compensator 6, 56 is provided with external diameter D. In the shown embodiment this diameter D lies in the range of 5-10 mm. It will be apparent that possible variations in dimensions are possible according to the invention.

For the purpose of a milking process milking cup 2 is in practice connected to teat 10 of the animal for milking. A pulsating action is then exerted via connection 16 on flexible wall part 18. Teat 10 is hereby stimulated to release milk. In order to avoid a vacuum or underpressure occurring in head or teat chamber 22 air is fed through via pressure compensator 6 to head or teat chamber 22. Pressure compensator 6, 56 is provided for this purpose with membrane or valve 40, 70 with passage 42, 72. The regulated air supply is hereby provided, whereby pressure variation in head or teat chamber 22 is avoided as far as possible. In one of the shown embodiments air chamber 50 is additionally provided for the purpose of regulating the air speed of the supplied air.

It has been found that a better milk release is realized in practice with application of the pressure compensator 6, 56. In addition, it has been found that irritations or infections of teat 10 are reduced or even wholly prevented.

The present invention is by no means limited to the above described preferred embodiments thereof. The scope of the invention is defined by the appended claims.

## Claims

1. Milking liner (4) for a milking cup (2) of a milking installation, the milking liner (4) comprising:
- a mouthpiece (24) with a teat chamber (22) provided with an inlet (8) for a teat;
- an outlet (12) for outflow of a milk release;
- a liner arranged between the mouthpiece (24) and the outlet (12); and
- an air inlet arranged in or close to the mouthpiece (24) with the teat chamber (22) and provided with a pressure compensator (6), **characterized in that** the pressure compensator (6) is provided with a pressure valve (40), wherein the pressure valve (40) comprises a membrane element with an air passage (42), wherein the pressure compensator (6) is configured to open at a pressure difference in the range of 1 to 100 kPa.

2. Milking liner (4) according to claim 1, wherein the pressure valve (40) is provided with a passage (42) with a maximum diameter in the range of 0.5-1.2 mm, preferably 0.5-1.1 mm, more preferably 0.6-1.0, and the maximum diameter of the passage (42) most preferably amounts to 0.6-0.8 mm.

3. Milking liner according to claim 1 or 2, further comprising a ring (76).

4. Milking liner according to claim 3, wherein the ring (76) has a design such that, when the pressure valve (40) is opened, it lies at least partially against the ring (76).

5. Milking liner (4) according to claim 4, wherein the ring (76) is provided with a flange-like element (90).

6. Milking liner (4) according to any one of the foregoing claims, wherein the pressure compensator (6) further comprises an air channel (54).

7. Milking liner (4) according to claim 6, wherein the air channel (54) is provided with an air chamber (50).

8. Milking liner (4) according to claim 7, wherein the air chamber (50) comprises a narrowed portion at or close to the transition to the air channel.

9. Milking liner (4) according to any one of the foregoing claims, wherein the pressure compensator (6) is arranged at or close to the inside of the milking liner (4).

10. Milking liner (4) according to any one of the foregoing claims, wherein the pressure compensator (6) is configured to open at a pressure difference in the range of 5 to 25 kPa, preferably in the range of 7.5 to 15 kPa.

11. Milking cup (2) for a milking installation provided with a milking liner (4) according to any one of the foregoing claims.

12. Milking installation comprising a number of milking cups (2) provided with a milking liner (4) according to any one of the foregoing claims.

13. Method for the milking, the method comprising of
- providing a milking installation with a number of milking cups (2) provided with a milking liner (4) according to any one of the foregoing claims;
- connecting the milking cups (2);
- controlling the head pressure with the pressure compensator (6); and
- milking.

14. Method according to claim 13, further comprising of selecting a pressure compensator (6).

## Patentansprüche

1. Melkzitzengummi (4) für einen Melkbecher (2) einer Melkanlage, der Melkzitzengummi (4) umfassend:
- ein Mundstück (24) mit einer Zitzenkammer (22), die mit einem Einlass (8) für eine Zitze versehen ist;
- einen Auslass (12) für einen Abfluss einer Milchabgabe;
- einen Zitzengummi, der zwischen dem Mundstück (24) und dem Auslass (12) angeordnet ist; und
- einen Lufteinlass, der in oder nahe dem Mundstück (24) mit der Zitzenkammer (22) angeordnet und mit einer Druckwaage (6) versehen ist, **dadurch gekennzeichnet, dass** die Druckwaage (6) mit einem Druckventil (40) versehen ist, wobei das Druckventil (40) ein Membranelement mit einem Luftdurchlass (42) umfasst, wobei die Druckwaage (6) konfiguriert ist, um sich bei einer Druckdifferenz in dem Bereich von 1 bis 100 kPa zu öffnen.

2. Melkzitzengummi (4) nach Anspruch 1, wobei das Druckventil (40) mit einem Durchlass (42) mit einem maximalen Durchmesser in dem Bereich von 0,5-1,2 mm, vorzugsweise 0,5-1,1 mm, mehr bevorzugt 0,6-1,0, versehen ist und der maximale Durchmesser des Durchlasses (42) am meisten bevorzugt 0,6-0,8 mm beträgt.

3. Melkzitzengummi nach Anspruch 1 oder 2, ferner umfassend einen Ring (76).

4. Melkzitzengummi nach Anspruch 3, wobei der Ring (76) eine derartige Gestaltung aufweist, dass er, wenn das Druckventil (40) geöffnet ist, mindestens teilweise an dem Ring (76) anliegt.

5. Melkzitzengummi (4) nach Anspruch 4, wobei der Ring (76) mit einem flanschartigen Element (90) versehen ist.

6. Melkzitzengummi (4) nach einem der vorstehenden Ansprüche, wobei die Druckwaage (6) ferner einen Luftkanal (54) umfasst.

7. Melkzitzengummi (4) nach Anspruch 6, wobei der Luftkanal (54) mit einer Luftkammer (50) versehen ist.

8. Melkzitzengummi (4) nach Anspruch 7, wobei die Luftkammer (50) einen vererengten Abschnitt an oder nahe dem Übergang zu dem Luftkanal umfasst.

9. Melkzitzengummi (4) nach einem der vorstehenden Ansprüche, wobei die Druckwaage (6) an oder nahe der Innenseite des Melkzitzengummis (4) angeordnet ist.

10. Melkzitzengummi (4) nach einem der vorstehenden Ansprüche, wobei die Druckwaage (6) konfiguriert ist, um sich bei einer Druckdifferenz in dem Bereich von 5 bis 25 kPa, vorzugsweise in dem Bereich von 7,5 bis 15 kPa zu öffnen.

11. Melkbecher (2) für eine Melkanlage, der mit einem Melkzitzengummi (4) nach einem der vorstehenden Ansprüche versehen ist.

12. Melkanlage, umfassend eine Anzahl von Melkbechern (2), die mit einem Melkzitzengummi (4) nach einem der vorstehenden Ansprüche versehen sind.

13. Verfahren zum Melken, das Verfahren umfassend:
- Versehen einer Melkanlage mit einer Anzahl von Melkbechern (2), die mit einem Melkzitzengummi (4) nach einem der vorstehenden Ansprüche versehen sind;
- Anschließen der Melkbecher (2);
- Regeln des Kopfdrucks mit der Druckwaage (6); und
- Melken.

14. Verfahren nach Anspruch 13, ferner umfassend ein Auswählen einer Druckwaage (6).

## Revendications

1. Manchon trayeur (4) destiné à un gobelet trayeur (2) d'une installation de traite, le manchon trayeur (4) comprenant :
- un embout (24) avec une chambre de trayon (22) pourvue d'une entrée (8) pour un trayon ;
- une sortie (12) pour l'évacuation d'une libération de lait ;
- un manchon agencé entre l'embout (24) et la sortie (12) ; et
- une entrée d'air agencée dans ou près de l'embout (24) avec la chambre de trayon (22) et pourvue d'un compensateur de pression (6),
**caractérisé en ce que** le compensateur de pression (6) est pourvu d'une soupape de pression (40), dans lequel la soupape de pression (40) comprend un élément de membrane avec un passage d'air (42), dans lequel le compensateur de pression (6) est conçu pour s'ouvrir à une différence de pression dans la plage de 1 à 100 kPa.

2. Manchon trayeur (4) selon la revendication 1, dans lequel la soupape de pression (40) est pourvue d'un passage (42) avec un diamètre maximal dans la plage de 0,5 à 1,2 mm, de préférence 0,5 à 1,1 mm, plus préférablement 0,6 à 1,0, et le diamètre maximal du passage (42) s'élève le plus préférablement à 0,6 à 0,8 mm.

3. Manchon trayeur selon la revendication 1 ou 2, comprenant en outre une bague (76).

4. Manchon trayeur selon la revendication 3, dans lequel la bague (76) a une conception telle que, lorsque la soupape de pression (40) est ouverte, elle se trouve au moins partiellement contre la bague (76).

5. Manchon trayeur (4) selon la revendication 4, dans lequel la bague (76) est pourvue d'un élément de type bride (90).

6. Manchon trayeur (4) selon l'une quelconque des revendications qui précèdent, dans lequel le compensateur de pression (6) comprend en outre un canal d'air (54).

7. Manchon trayeur (4) selon la revendication 6, dans lequel le canal d'air (54) est pourvu d'une chambre à air (50).

8. Manchon trayeur (4) selon la revendication 7, dans lequel la chambre à air (50) comprend une partie resserrée au niveau ou près de la transition vers le canal d'air.

9. Manchon trayeur (4) selon l'une quelconque des revendications qui précèdent, dans lequel le compensateur de pression (6) est agencé au niveau ou près de l'intérieur du manchon trayeur (4).

10. Manchon trayeur (4) selon l'une quelconque des revendications qui précèdent, dans lequel le compensateur de pression (6) est conçu pour s'ouvrir à une différence de pression dans la plage de 5 à 25 kPa, de préférence dans la plage de 7,5 à 15 kPa.

11. Gobelet trayeur (2) destiné à une installation de traite pourvue d'un manchon trayeur (4) selon l'une quelconque des revendications qui précèdent.

12. Installation de traite comprenant un certain nombre de gobelets trayeurs (2) pourvus d'un manchon trayeur (4) selon l'une quelconque des revendications qui précèdent.

13. Procédé destiné à la traite, le procédé comprenant :
- la fourniture d'une installation de traite avec un certain nombre de gobelets trayeurs (2) pourvus d'un manchon trayeur (4) selon l'une quelconque des revendications qui précèdent ;
- le raccordement des gobelets trayeurs (2) ;
- la commande de la pression de refoulement avec le compensateur de pression (6) ; et
- la traite.

14. Procédé selon la revendication 13, comprenant en outre la sélection d'un compensateur de pression (6).
